# EUROPEAN PATENT APPLICATION

(11) **EP 4 796 471 A1**
(43) Date of publication of application: **26.08.2026**
(21) Application number: 25159902.3
(22) Date of filing: 25.02.2025
(51) Int. Cl.: B65G 47/96, B65G 47/40, B65G 25/06

(54) **A SORTING DEVICE WITH A TILTABLE CARRIER**

(71) Applicant: Eurosort B.V., 1243 HV 's-Graveland (NL)
(72) Inventor: De Jong, Wiebe, 1014 ZE Amsterdam (NL); Zwart, Wouter Robert Johan, 2051 JA Overveen (NL)
(74) Representative: De Vries & Metman

(57) **Abstract**

A sorting device (1) comprises a frame (2), a carrier (6) for supporting an article, which carrier (6) is movable with respect to the frame (2) in vertical direction between an article input and a plurality of article outputs (7) which are located above each other and at least a pair of hoisting elements (14) which are mounted to the carrier (6) at a distance from each other in a first horizontal direction. The sorting device (1) comprises drivable actuators (9) for driving the respective hoisting elements (14) in opposite vertical directions with respect to the frame (2) such that the carrier (6) is displaceable in vertical direction upon driving the hoisting elements (14) in the same vertical direction and tiltable about a horizontal axis extending in a second horizontal direction upon driving only one of the hoisting elements (14) in vertical direction or both of the hoisting elements (14) in opposite vertical directions. The first and second horizontal directions are perpendicular to each other.

## Description

The present invention relates to a sorting device.

Sorting devices are well-known in the prior art. There is a demand for a sorting device which can sort articles in vertical direction in a simple manner.

An object of the invention is to provide such a sorting device.

This object is accomplished with the sorting device according to the invention which comprises a frame, a carrier for supporting an article, which carrier is movable with respect to the frame in vertical direction between an article input and a plurality of article outputs which are located above each other, at least a pair of hoisting elements which are mounted to the carrier at a distance from each other in a first horizontal direction and drivable actuators for driving the respective hoisting elements in opposite vertical directions with respect to the frame such that the carrier is displaceable in vertical direction upon driving the hoisting elements in the same vertical direction and tiltable about a horizontal axis extending in a second horizontal direction upon driving only one of the hoisting elements in vertical direction or both of the hoisting elements in opposite vertical directions, wherein the first and second horizontal directions are perpendicular to each other.

An advantage of the sorting device according to the invention is that the hoisting elements are used for transporting the carrier in vertical direction to a selected article output as well as for tilting the carrier so as to discharge an article from the carrier to the article output. This makes the sorting device relatively simple.

The article input may be located at a higher height level than the article outputs. In this case a supply conveyor may be located above the sorting device and drop an article onto the carrier at the article input, after which the carrier can transfer the article to one of the selected article outputs.

The hoisting elements my comprise respective flexible elements, such as belts or ropes.

In a particular embodiment, each of the actuators comprises a winch for wounding up the corresponding flexible element during moving it upwardly and wounding out the corresponding flexible element during moving it downwardly, wherein the winch is rotatably mounted to the frame.

Preferably, each of the actuators is drivable through an electric motor, since electric motors are reliable, fast and drivable in opposite directions.

In an embodiment the frame is provided with an upwardly directed guide for guiding the carrier during moving it in vertical direction, wherein the guide and the carrier are adapted such that the carrier is tiltable with respect to the guide. This provides a stable movement of the carrier in vertical direction and a well-defined location of the horizontal axis in the first horizontal direction about which the carrier is tiltable.

The carrier may be provided with circular segments along which the respective flexible elements wind and unwind during tilting the carrier. This feature serves to keep the distance between locations where the flexible elements engage the carrier during tilting remains the same in the first horizontal direction.

In an embodiment the pair of hoisting elements is a first pair of hoisting elements and the sorting device comprises a second pair of hoisting elements which are mounted to the carrier at a distance from each other in the first horizontal direction and drivable actuators for driving the respective second hoisting elements, wherein the first pair of hoisting elements are mounted to the carrier at a distance from the second pair of hoisting elements in the second horizontal direction.

The carrier, the first pair of hoisting elements, the second pair of hoisting elements and the respective actuators may be mirror symmetrical with respect to a first vertical plane extending in the first horizontal direction and a second vertical plane extending in the second horizontal direction.

The guide may lie in the second vertical plane.

In an embodiment the carrier is provided with a bottom for supporting an article, wherein the article outputs are provided with discharge chutes for discharging an article which is discharged from the carrier, wherein an end of the bottom of the carrier in the first horizontal direction is higher or substantially flush with the discharge chutes when the carrier is tilted at the respective discharge chutes and/or wherein the bottom at a central region thereof is lower than the end thereof. The former feature provides a smooth transfer of an article from the tilted carrier to a selected discharge chute, the latter feature prevents an article from being prematurely discharged from the carrier.

The article outputs may be located at opposite sides of a path along which the carrier is displaced in vertical direction. A high sorting efficiency is obtained when the carrier is tiltable in opposite directions to discharge articles to the article outputs at the opposite sides of the path.

The invention will hereafter be elucidated with reference to very schematic drawings showing an embodiment of the invention by way of example.

Fig. 1 is a perspective view of an embodiment of a sorting device according to the invention.

Fig. 2 is a side view of the embodiment as shown in Fig. 1.

Fig. 3 is an enlarged view of a part of Fig. 2.

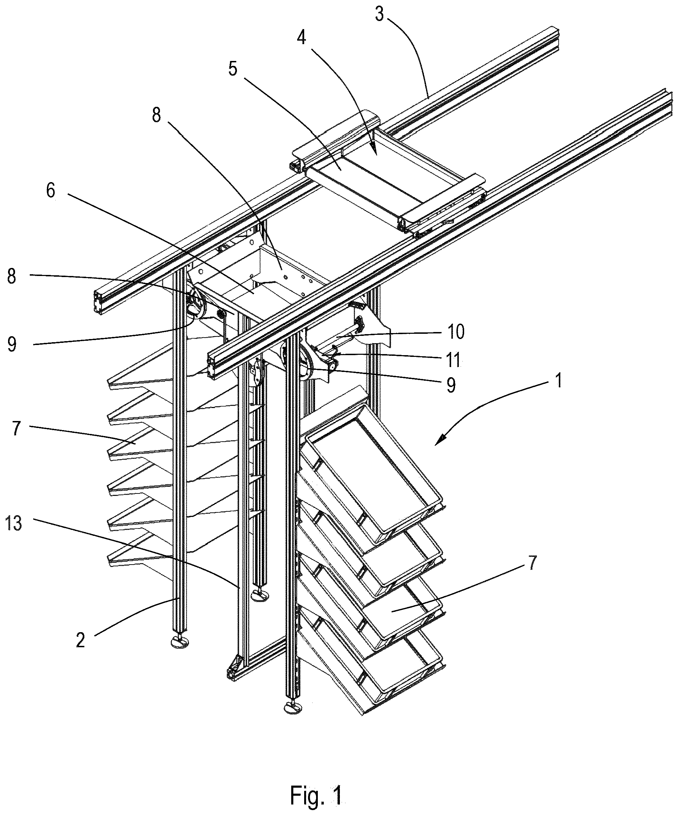

Figs. 1-3 show an embodiment of a sorting device 1 according to the invention. The sorting device 1 has a frame 2 including four posts which are located below an article supply conveyor 3. In this case the article supply conveyor 3 is provided with a plurality of carriages 4 including tiltable trays 5, but numerous alternative article supply conveyors are conceivable.

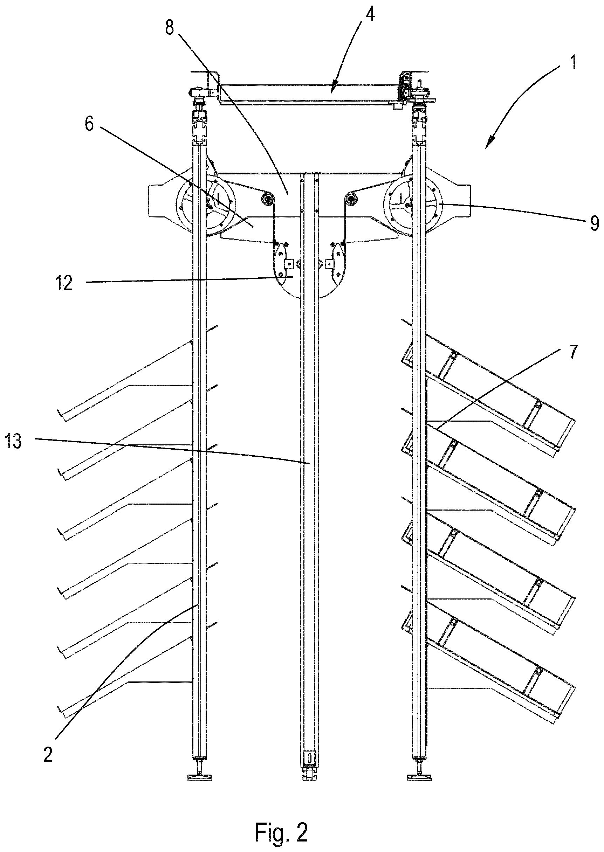

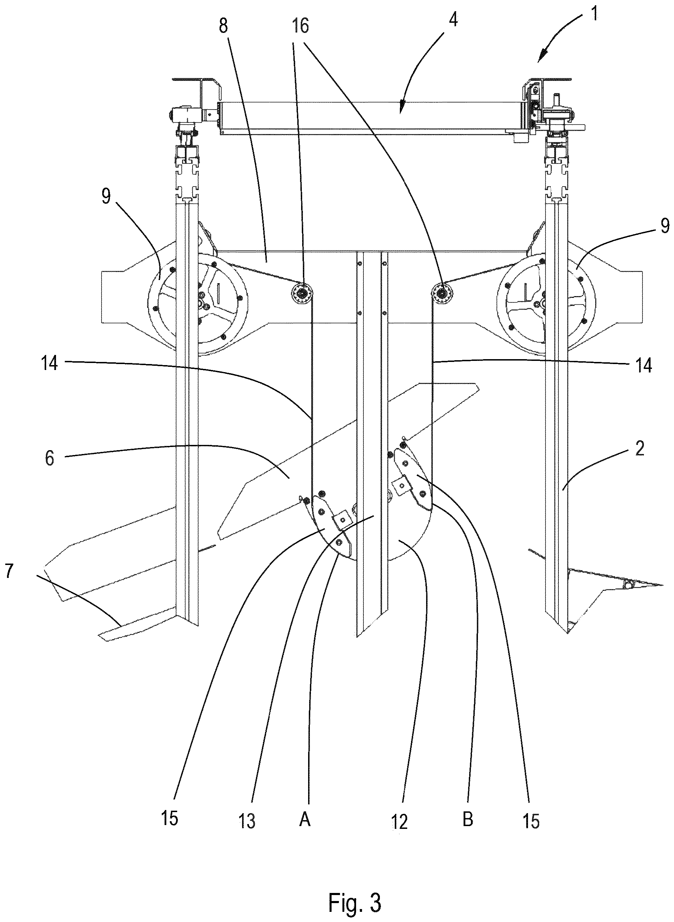

The sorting device 1 comprises a carrier 6 for supporting and transporting an article in vertical direction. The carrier 6 is movable with respect to the frame 2 in vertical direction between an article input at an upper location of the frame 2 and a plurality of article outputs which are located above each other below the article input. In this case the article outputs are provided with chutes 7 for receiving an article from the carrier 6. The chutes 7 are located at opposite sides of a path along which the carrier 6 is displaced in vertical direction. Figs. 1 and 2 show a condition in which the carrier 6 is located at the article input and Fig. 3 shows a condition in which the carrier 6 is located at a selected article output.

In the embodiment as shown in Figs. 1-3 the frame 2 is provided with two parallel horizontally-oriented beams 8. The beams 8 extend in a first horizontal direction and are located at a distance from each other in a second horizontal direction which is perpendicular to the first horizontal direction. Each of the beams 8 is provided with a pair of actuators in the form of a pair of winches 9 which are rotatably mounted to the corresponding beam 8. The winches 9 which are aligned in the second horizontal direction are fixed to each other through respective shafts 10, which in turn are drivably coupled to electric motors 11 which can drive the winches 9 which are located at a distance from each other in the first horizontal direction in opposite directions.

The carrier 6 comprises a tray for supporting an article. A tilting member 12 is fixed to the tray at a lower side thereof and rotatably and slidably mounted to upwardly directed guides 13 which are located at opposite sides of the carrier 6 in the second horizontal direction and form part of the frame 2.

The sorting device 1 is provided with four flexible hoisting elements in the form of four ropes 14. The ropes 14 are mounted to the respective winches 9 and can be wound up and wound out by driving the winches 9 through the electric motors 11. Referring to Fig. 3, two ropes 14 corresponding to respective winches 9 of each pair of winches 9 are fixed to respective first locations A at one side of the tilting member 12 and two ropes 14 corresponding to respective other winches 9 of each pair of winches 9 are fixed to respective second locations B at an opposite side of the tilting member 12. The first and second locations A, B at each pair of ropes 14 are located at a distance from each other in the first horizontal direction. The first locations A associated with two ropes 14 are located at a distance from each other in the second horizontal direction and the second locations B associated with two ropes 14 are located at a distance from each other in the second horizontal direction.

The tilting member 12 is provided with circular segments 15 along which the corresponding ropes 14 wind and unwind when the carrier 6 is tilted. This is illustrated in Fig. 3. The circular segments 15 keep the ropes 14 at a constant distance from each other in the first horizontal direction during tilting the carrier 6. In the embodiment as shown in Figs. 1-3 the ropes are guided by auxiliary wheels 16 which are rotatably mounted to the supports 8. It is noted that in this case the auxiliary wheels 16 and the circular segments 15 are dimensioned and located such that the ropes 14 remain vertical when the carrier 6 is moved in vertical direction and tilted.

Under operating conditions an article may be transferred from a carriage 4 to the carrier 6 by opening the trays 5 when the carriage 4 is located above the carrier 6 and the carrier 6 is located at the input location. Subsequently, the carrier 6 can be lowered to one of the chutes 7 where the article can be discharged to the selected chute 7 by driving all winches 9 simultaneously such that the four ropes 14 including the carrier 6 are moved downwardly. Then, the carrier 6 can be tilted to discharge the article by driving only one of the winches 9 of each pair of winches 9 such that the corresponding ropes are moved upwardly. It is also possible to drive the other winches 9 in opposite direction at the same time such that the corresponding ropes 14 are moved downwardly.

The sorting device 1 may be adapted such that a bottom of the carrier 6 is flush or approximately flush with each of the chutes 7 when the carrier 6 is tilted at the corresponding chute 7.

The bottom of the carrier 6 may be adapted such that an article on the bottom is prevented from prematurely rolling or sliding from the carrier 6. For example, the bottom may have a depression at a central region between its opposite ends in the first horizontal direction.

The invention is not limited to the embodiment shown in the drawings and described hereinbefore, which may be varied in different manners within the scope of the claims and their technical equivalents.

## Claims

1. A sorting device (1), comprising a frame (2), a carrier (6) for supporting an article, which carrier (6) is movable with respect to the frame (2) in vertical direction between an article input and a plurality of article outputs (7) which are located above each other, at least a pair of hoisting elements (14) which are mounted to the carrier (6) at a distance from each other in a first horizontal direction and drivable actuators (9) for driving the respective hoisting elements (14) in opposite vertical directions with respect to the frame (2) such that the carrier (6) is displaceable in vertical direction upon driving the hoisting elements (14) in the same vertical direction and tiltable about a horizontal axis extending in a second horizontal direction upon driving only one of the hoisting elements (14) in vertical direction or both of the hoisting elements (14) in opposite vertical directions, wherein the first and second horizontal directions are perpendicular to each other.

2. A sorting device (1) according to claim 1, wherein the article input is located at a higher height level than the article outputs (7).

3. A sorting device (1) according to claim 1 or 2, wherein the hoisting elements comprise respective flexible elements, such as belts or ropes (14).

4. A sorting device (1) according to claim 3, wherein each of the actuators comprises a winch (14) for wounding up the corresponding flexible element (14) during moving it upwardly and wounding out the corresponding flexible element (14) during moving it downwardly, wherein the winch (9) is rotatably mounted to the frame (2).

5. A sorting device (1) according to any one of the preceding claims, wherein each of the actuators (9) is drivable through an electric motor (11).

6. A sorting device (1) according to any one of the preceding claims, wherein the frame (2) is provided with an upwardly directed guide (13) for guiding the carrier (6) during moving it in vertical direction, wherein the guide (13) and the carrier (6) are adapted such that the carrier (6) is tiltable with respect to the guide (13).

7. A sorting device (1) according to any one of the preceding claims and claim 3, wherein the carrier (6) is provided with circular segments (15) along which the respective flexible elements (14) wind and unwind during tilting the carrier (6).

8. A sorting device (1) according to any one of the preceding claims, wherein the pair of hoisting elements (14) is a first pair of hoisting elements (14) and the sorting device (1) comprises a second pair of hoisting elements (14) which are mounted to the carrier (6) at a distance from each other in the first horizontal direction and drivable actuators (9) for driving the respective second hoisting elements (14), wherein the first pair of hoisting elements (14) are mounted to the carrier (6) at a distance from the second pair of hoisting elements (14) in the second horizontal direction.

9. A sorting device (1) according to claim 8, wherein the carrier (6), the first pair of hoisting elements (14), the second pair of hoisting elements (14) and the respective actuators (9) are mirror symmetrical with respect to a first vertical plane extending in the first horizontal direction and a second vertical plane extending in the second horizontal direction.

10. A sorting device (1) according to claim 9 and claim 6, wherein the guide (13) lies in the second vertical plane.

11. A sorting device (1) according to any one of the preceding claims, wherein the carrier (6) is provided with a bottom for supporting an article, wherein the article outputs are provided with discharge chutes (7) for discharging an article which is discharged from the carrier (6), wherein an end of the bottom of the carrier (6) in the first horizontal direction is higher or substantially flush with the discharge chutes (7) when the carrier (6) is tilted at the respective discharge chutes (7) and/or wherein the bottom at a central region thereof is lower than an end thereof in the first horizontal direction.

12. A sorting device (1) according to any one of the preceding claims, wherein the article outputs (7) are located at opposite sides of a path along which the carrier (6) is displaced in vertical direction.
